# EUROPÄISCHE PATENTSCHRIFT

(11) **EP 3 005 449 B1**
(45) Veröffentlichungstag und Bekanntmachung des Hinweises auf die Patenterteilung: **05.08.2020**
(21) Anmeldenummer: 14728566.2
(22) Anmeldetag: 05.06.2014
(51) Int. Cl.: H01M 4/134, H01M 4/36, H01M 10/0525, H01M 10/0567, H01M 10/0568, H01M 4/38, H01M 4/587

(54) **NEUE ELEKTROLYTZUSAMMENSETZUNG FÜR HOCHENERGIEANODEN**
NEW ELECTROLYTE COMPOSITION FOR HIGH-ENERGY ANODES
NOUVELLE COMPOSITION ÉLECTROLYTIQUE POUR ANODES À HAUTE ÉNERGIE

(30) Priorität: 07.06.2013 DE 102013210631
(43) Veröffentlichungstag der Anmeldung: 13.04.2016
(73) Patentinhaber: Volkswagen Aktiengesellschaft, 38440 Wolfsburg (DE)
(72) Erfinder: DÖLLE, Janis, Daejeon, Yuseong-Gu (KP); HERRMANN, Mirko, 38440 Wolfsburg (DE)
(74) Vertreter: Clarenbach, Carl-Philipp
(86) Internationale Anmeldenummer: PCT/EP2014/061709
(87) Internationale Veröffentlichungsnummer: WO 2014/195407

(56) Entgegenhaltungen:
- JP-A- 2005 251 456
- VINODKUMAR ETACHERI ET AL: "Exceptional Electrochemical Performance of Si-Nanowires in 1,3-Dioxolane Solutions: A Surface Chemical Investigation", LANGMUIR, Bd. 28, Nr. 14, 10. April 2012 (2012-04-10), Seiten 6175-6184, XP055128885, ISSN: 0743-7463, DOI: 10.1021/la300306v in der Anmeldung erwähnt
- FRIDMAN K ET AL: "A new advanced lithium ion battery: Combination of high performance amorphous columnar silicon thin film anode, 5V LiNi0.5Mn1.5O4spinel cathode and fluoroethylene carbonate-based electrolyte solution", ELECTROCHEMISTRY COMMUNICATIONS, Bd. 33, 18. April 2013 (2013-04-18), Seiten 31-34, XP028679703, ISSN: 1388-2481, DOI: 10.1016/J.ELECOM.2013.04.010

## Beschreibung

Die vorliegende Erfindung betrifft eine Elektrolytzusammensetzung für eine Lithium-Ionen-Batterie mit mindestens einer Kathode und mindestens einer Anode, eine Lithium-Ionen-Batterie enthaltend die Elektrolytzusammensetzung sowie die Verwendung einer fluorhaltigen Carbonat-Komponente und Lithiumnitrat zur Verbesserung der Zyklenbeständigkeit und/oder zur Leistungssteigerung einer Lithium-Ionen-Batterie.

Im Stand der Technik bekannte Anoden für Lithium-Ionen-Batterien (LIB) bestehen zumeist aus graphitischem Kohlenstoff, der eine theoretische Kapazität von 372 mAh/g liefert. Bei der Kathode wird üblicherweise als Aktivmaterial eine Lithium-Metalloxid-Verbindung, wie Lithiumcobaltdioxid LiCoO₂, Lithiumnickeldioxid LiNiO₂, Lithiummangandioxid LiMnO₂, Lithiummangantetraoxid LiMn₂O₄, Lithiumnickelmanganoxid Li_{1,0}Ni_{0,5}Mn_{1,5}O₄, Lithiumnickelmangancobaltoxid LiNi_{0,33}Mn_{0,33}Co_{0,33}O₂ und Hochenergie-Lithiumnickelmangancobaltoxid Li_{1,2}Ni_{0,176}Mn_{0,524}Co_{0,100}O₂ verwendet. Die beiden Elektroden, d.h. die Anode und die Kathode, sind über einen flüssigen, nicht wässrigen Elektrolyten, einen Polymer- oder Gelelektrolyten miteinander verbunden.

Die flüssigen, nicht wässrigen Elektrolyten weisen zumeist ein oder mehrere organische Lösungsmittel und ein darin gelöstes Lithiumsalz auf. Bei den Lithiumsalzen handelt es sich beispielsweise um Lithiumhexafluorophosphat (LiPF₆), Lithiumtetrafluoroborat (LiBF₄), Lithiumperchlorat (LiClO₄), Lithiumhexafluoroarsenat (LiAsF₆) und Lithiumdisoxalatoborat (LiBOB). Bei den organischen Lösungsmitteln handelt es sich in der Regel um eine Kombination der nachfolgenden Lösungsmitteln: Propylencarbonat (PC), Ethylencarbonat (EC), Dimethylcarbonat (DMC), Diethylcarbonat (DEC), Ethylmethylcarbonat (EMC), Tetrahydrofuran (THF), 1,2-Dimethoxyethan (DME) und 2-Methyltetrahydrofuran (2Me-THF).

US 2012/0129054 A1 offenbart eine Siliziumanodenbatterie, deren Elektrolytzusammensetzung unter anderem Fluorethylencarbonat, auch FEC genannt, als Additiv aufweist.

Aurbach et al. (Langmuir, 2012, 28, 6175 bis 6184) konnten zeigen, dass die Zugabe von Lithiumnitrat LiNO₃ zu einem Elektrolyten, welcher Lithiumbis(trifluoromethansulfonyl)imid als Leitsalz und Dioxalan als Lösungsmittel aufweist, zu einer Leistungssteigerung von Lithium-Ionen-Batterien führt, wobei als Anodenmaterial Siliziumnanodrähte verwendet werden.

Um die Energiedichte für Lithium-Ionen-Batterien zu erhöhen, können sowohl die Elektrodenmaterialien als auch die Elektrolytzusammensetzungen geändert oder angepasst werden. Eine Möglichkeit zur Verbesserung der spezifischen Anodenkapazität ist der Einsatz von Elementen, wie Silizium, Zinn, Antimon, Aluminium, Magnesium und deren Legierungen, die mit Lithium Verbindungen eingehen können. Durch diese chemischen Elemente und Verbindungen kann mehr Lithium als bei graphitischem Kohlenstoff reversibel gespeichert werden. Silizium-Anoden haben beispielsweise eine theoretische Kapazität von 3578 mAh/g bei Raumtemperatur. Jedoch kommt es bei der Verwendung dieser neuartigen Anodenmaterialien aufgrund des spezifischen Lithiumspeichermechanismus (Konversionsreaktion) zu einer erheblichen Volumenänderung der Anode von bis zu 300 bis 400 Volumen-% während der Lithiierung und Delithiierung. Die sich während der ersten Zyklen auf der Anodenoberfläche ausbildenden Oberflächenschicht, auch SEI (Solid Elektrolyte Interface) genannt, wird jedoch aufgrund der Volumenänderung der Anode während einer wiederholten Lithiierung und Delithiierung mechanisch und/oder chemisch beschädigt und muss daher neu gebildet werden. Dies führt unter anderem zu einem ständigen Kapazitätsverlust der Lithium-Ionen-Batterie.

Die Druckschrift JP 2005 251456 A beschreibt eine gattungsgemäße Elektrolytzusammensetzung für eine sekundäre Lithiumbatterie. Die Elektrolytzusammensetzung weist unter anderem zwei Lithiumsalze, von denen eines Lithiumnitrat ist, eine fluorhaltige zyklische Carbonat-Komponente und ein aprotisches, nichtwässriges Lösungsmittel auf.

Es ist Aufgabe der vorliegenden Erfindung, eine geeignete Elektrolytzusammensetzung bereitzustellen, welche die Ausbildung einer verbesserten, insbesondere dauerhaften, sich während der ersten Zyklen auf einer Anodenoberfläche ausbildenden Oberflächenschicht, auch SEI (Solid Elektrolyte Interface) genannt, ermöglicht. Demzufolge soll insbesondere durch die Elektrolytzusammensetzung verhindert werden, dass die Oberflächenschicht nach einer Vielzahl von durchlaufenen Zyklen, d.h. nach einer Vielzahl von Lade- und Entladeprozessen, mechanisch und/oder chemisch beschädigt wird und wieder neu gebildet werden muss. Insbesondere soll eine verbesserte Lebensdauer und/oder Zyklenbeständigkeit einer Lithium-Ionen-Batterie bereitgestellt werden.

Die Aufgabe der vorliegenden Erfindung wird durch die unabhängigen Ansprüche gelöst.

Erfindungsgemäß ist eine Elektrolytzusammensetzung für eine Lithium-Ionen-Batterie mit mindestens einer Kathode und mindestens einer Anode, bevorzugt einer Hochengerieanode, vorgesehen, wobei die Elektrolytzusammensetzung (i) mindestens ein aprotisches, nicht wässriges Lösungsmittel, (ii) eine fluorhaltige zyklische Carbonat-Komponente und (iii) mindestens zwei Lithiumsalze enthält, wobei das eine Lithiumsalz Lithiumnitrat ist.

Unter dem Begriff "fluorhaltige zyklische Carbonat-Komponente" wird erfindungsgemäß ein zyklischer Ester der Kohlensäure verstanden, der sich durch die chemische Formel R1-O-(C=O)-O-R2 darstellen lässt, wobei die Reste R1 und R2 miteinander kovalent verbunden sind und eine Kohlenwasserstoffkette, bevorzugt mit zwei bis vier Kohlenstoffatomen, bevorzugt mit zwei Kohlenstoffatomen, ausbilden, wobei die Kohlenwasserstoffkette mindestens ein, bevorzugt genau ein Fluor-Atom als Substituent aufweist.

Unter dem Begriff "Lithium-Ionen-Batterie" wird erfindungsgemäß sowohl eine primäre als auch sekundäre Lithium-Ionen-Batterie, bevorzugt eine sekundäre Lithium-Ionen-Batterie, verstanden. Eine primäre Lithium-Ionen-Batterie ist eine nicht-wiederaufladbare Lithium-Ionen-Batterie; eine sekundäre Batterie ist eine wiederaufladbare Lithium-Ionen-Batterie. Die erfindungsgemäße Lithium-Ionen-Batterie weist a) ein Gehäuse, b) einen Batteriekern aufweisend mindestens eine Kathode und mindestens eine Anode und c) eine erfindungsgemäße Elektrolytzusammensetzung auf.

Trotz einer großen Volumenänderung der Anode, bevorzugt der Hochenergieanode, insbesondere der Siliziumanode und/oder der Silizium/Kohlenstoff-Komposit-Anode, während des Lithiierung- und Delithiierungsprozesses wird durch die erfindungsgemäße Kombination aus (i) einem aprotischen, insbesondere carbonatischen, nicht wässrigen Lösungsmittel, (ii) der fluorhaltigen zyklischen Carbonat-Komponente, insbesondere Fluorethylencarbonat, und (iii) den zwei Lithiumsalzen, wobei das eine Lithiumsalz Lithiumnitrat ist, eine sehr stabile Oberflächenschicht auf der Anodenoberfläche, auch SEI genannt, ausgebildet. Die Oberflächenschicht auf der Anode entsteht unter anderem durch die partielle Zersetzung der in der Elektrolytzusammensetzung vorhandenen chemischen Stoffe, insbesondere durch die Zersetzung des (i) mindestens einen aprotischen, insbesondere carbonatischen, nicht wässrigen Lösungsmittels und (ii) der fluorhaltigen zyklischen Carbonat-Komponente, insbesondere des Fluorethylencarbonats. Das Lithiumsalz Lithiumnitrat wird ebenfalls in die Oberflächenschicht eingebaut. Insbesondere durch die Kombination der fluorhaltigen zyklischen Carbonat-Komponente und des Lithiumnitrat wird überraschenderweise die Stabilität der Oberflächenschicht erhöht. Diese spezifische Oberflächenschicht ermöglicht es, über mindestens 60 Zyklen, bevorzugt mindestens 100 Zyklen, die Kapazität einer Lithium-Ionen-Batterie nahezu konstant, bevorzugt konstant zu halten. Die Kapazität der Lithium-Ionen-Batterie beträgt aufgrund dessen nach 60 Zyklen, bevorzugt nach 100 Zyklen, mindestens 80 %, bevorzugt mindestens 85 %, bevorzugt mindestens 90 %, bevorzugt mindestens 95 % der Kapazität derselben Lithium-Ionen-Batterie nach dem dritten Lade- und Entladezyklus nach erstmaliger Inbetriebnahme. Die Lebensdauer und Zyklenbeständigkeit der Anode und auch der Lithium-Ionen-Batterie ist aufgrund der erfindungsgemäßen Elektrolytzusammensetzung überraschenderweise signifikant erhöht worden.

Das als Additiv verwendete Lithiumnitrat ist in dem erfindungsgemäß verwendeten aprotischen, nicht wässrigen Lösungsmittel nur in sehr geringen Mengen löslich und bildet bevorzugt in den erfindungsgemäßen Mengen einen Bodensatz in der Elektrolytzusammensetzung. Trotz der sehr geringen Löslichkeit in dem erfindungsgemäß verwendeten Lösungsmittel wird durch die Verwendung von Lithiumnitrat in der Elektrolytzusammensetzung in Kombination mit der fluorhaltigen zyklischen Carbonat-Komponente, bevorzugt mit dem Fluorethylencarbonat, eine deutliche Verbesserung der Leistungskapazität und der Zyklenbeständigkeit einer Lithium-Ionen-Batterie erreicht.

Eine bevorzugte Ausgestaltung der Erfindung sieht eine Elektrolytzusammensetzung vor, wobei die zyklische fluorhaltige Carbonat-Komponente in einer Menge von 1 bis 50 Gew.% (bezogen auf das Gesamtgewicht der Elektrolytzusammensetzung) vorhanden ist. Dadurch wird eine besonders stabile Oberflächenschicht auf der Anodenoberfläche bereitgestellt.

Bevorzugt ist die zyklische fluorhaltige Carbonat-Komponente in einer Menge von 0,05 bis 50 Gew.%, bevorzugt 5 bis 50 Gew.%, bevorzugt 5 bis 20 Gew.%, bevorzugt 8 bis 12 Gew.% (jeweils bezogen auf das Gesamtgewicht der Elektrolytzusammensetzung) in der Elektrolytzusammensetzung vorhanden.

In einer bevorzugten Elektrolytzusammensetzung der Erfindung ist das Lithiumnitrat in einer Menge von 0,05 bis 20 Gew.% (bezogen auf das Gesamtgewicht der Elektrolytzusammensetzung) vorhanden. Durch diese Lithiumnitrat-Mengen wird ein verbesserter Lithiumtransport durch die Oberflächenschicht hindurch zur Anodenoberfläche erreicht.

Bevorzugt ist das Lithiumnitrat in einer Menge von 0,05 bis 20 Gew-%, bevorzugt 0,1 bis 15 Gew-%, bevorzugt 0,05 bis 5 Gew.%, bevorzugt 0,1 bis 10 Gew.%, bevorzugt 0,1 bis 5 Gew.%, bevorzugt 0,1 bis 1 Gew.%, bevorzugt 0,05 bis 0,5 Gew. % (jeweils bezogen auf das Gesamtgewicht der Elektrolytzusammensetzung) in der Elektrolytzusammensetzung vorhanden.

Bevorzugt sieht die Erfindung eine Elektrolytzusammensetzung vor, wobei die fluorhaltige zyklische Carbonat-Komponente Fluorethylencarbonat ist. Das Fluorethylencarbonat wird auch als 4-Fluor-1,3-dioxolan-2-on bezeichnet. Das Fluorethylencarbonat weist eine verbesserte elektrochemische Stabilität im Vergleich zu den weiteren fluorhaltigen zyklischen Carbonat-Komponenten auf.

Eine bevorzugte Ausgestaltung der Erfindung sieht eine Elektrolytzusammensetzung vor, die zusätzlich Vinylencarbonat enthält. Das Vinylencarbonat wirkt filmbildend, wodurch die Oberflächenschicht auf der Anodenoberfläche schneller und/oder stabiler ausgebildet wird.

Bevorzugt ist das Vinylencarbonat in einer Menge von 0 bis 10 Gew.%, bevorzugt 0,05 bis 10 Gew.%, bevorzugt 1 bis 5 Gew.% (jeweils bezogen auf das Gesamtgewicht der Elektrolytzusammensetzung) in der Elektrolytzusammensetzung vorhanden.

Bevorzugt ist das mindestens eine aprotische, nicht wässrige Lösungsmittel ausgewählt aus der Gruppe bestehend aus Propylencarbonat (PC), Ethylencarbonat (EC), Dimethylcarbonat (DMC), Diethylcarbonat (DEC), Ethylmethylcarbonat (EMC), Tetrahydrofuran (THF), 1,2-Dimethoxyethan (DME), 2-Methyltetrahydrofuran (2Me-THF), Vinylencarbonat (VC), N-Methylpyrrolidon (NMP), Acetonitril, Ethylacetat und einer beliebigen Kombination davon.

Bevorzugt ist das mindestens eine aprotische, nicht wässrige Lösungsmittel ein carbonatisches, nicht wässriges Lösungsmittel. Bevorzugt ist das mindestens eine carbonatische, nicht wässrige Lösungsmittel ausgewählt aus der Gruppe bestehend aus Propylencarbonat (PC), Ethylencarbonat (EC), Dimethylcarbonat (DMC), Diethylcarbonat (DEC), Ethylmethylcarbonat (EMC) und Vinylencarbonat (VC). Bevorzugt wird ein Gemisch aus mindestens zwei carbonatischen, nicht wässrigen Lösungsmitteln eingesetzt, wobei die carbonatischen, nicht wässrigen Lösungsmittel ausgewählt sind aus der Gruppe bestehend aus Propylencarbonat (PC), Ethylencarbonat (EC), Dimethylcarbonat (DMC), Diethylcarbonat (DEC), Ethylmethylcarbonat (EMC) und Vinylencarbonat (VC). Bevorzugt besteht das Gemisch aus Ethylencarbonat (EC), Dimethylcarbonat (DMC) und Diethylcarbonat (DEC). Alternativ bevorzugt besteht das Gemisch aus zwei carbonatischen, nicht wässrigen Lösungsmitteln ausgewählt sind aus der Gruppe bestehend aus Propylencarbonat (PC), Ethylencarbonat (EC), Dimethylcarbonat (DMC), Diethylcarbonat (DEC), Ethylmethylcarbonat (EMC) und Vinylencarbonat (VC) im Verhältnis 3:7 bis 7:3 (bezogen auf das Gewicht).

Der maximale Wassergehalt in dem mindestens einem aprotischen, nicht wässrigen Lösungsmittel, bevorzugt in dem mindestens einen carbonatischen, nicht wässrigen Lösungsmittel, bevorzugt in der Elektrolytzusammensetzung, ist höchstens 1000 ppm, bevorzugt weniger als 500 ppm, bevorzugt weniger als 50 ppm. Bevorzugt ist der Wassergehalt in dem mindestens einen aprotischen, nicht wässrigen Lösungsmittel, bevorzugt in dem mindestens einen carbonatischen, nicht wässriges Lösungsmittel, bevorzugt in der Elektrolytzusammensetzung, höchstens 0,1 Gew.%, bevorzugt weniger als 0,05 Gew.%, bevorzugt weniger als 0,005 Gew.% (bezogen auf das Gesamtgewicht des Lösungsmittels beziehungsweise der Elektrolytzusammensetzung).

In einer bevorzugten Ausführungsform der vorliegenden Erfindung weist die Elektrolytzusammensetzung das mindestens eine aprotische, bevorzugt carbonatische, nicht wässrige Lösungsmittel in einer Menge von mehr als 50 Gew.%, bevorzugt mehr als 60 Gew.%, bevorzugt mehr als 70 Gew.%, bevorzugt mehr als 80 Gew.%, bevorzugt mehr als 90 Gew.%, bevorzugt mehr als 95 Gew.%, bevorzugt mehr als 99 Gew.%, bevorzugt mehr als 99,9 Gew.%, bevorzugt 100 % (bezogen auf das in der Elektrolytzusammensetzung vorhandene Lösungsmittel) auf.

Bevorzugt weist die Elektrolytzusammensetzung neben dem Lithiumsalz Lithiumnitrat mindestens ein weiteres Lithiumsalz auf, ausgewählt aus der Gruppe bestehend aus Lithiumbis(fluorsulfonyl)imid, Lithiumhexafluorophosphat, Lithiumtetrafluoroborat, Lithiumperchlorat, Lithiumhexafluoroarsenat, Lithiumdisoxalatoborat, Lithiumdifluorooxalatoborat und einer beliebigen Kombination davon. Das mindestens eine weitere Lithiumsalz dient bevorzugt als Leitsalz. Die Konzentration des weiteren Lithiumsalzes, bevorzugt des Leitsalzes, liegt bevorzugt im Bereich von 0,8 bis 1,2 M (mol/L).

Erfindungsgemäß weist die Elektrolytzusammensetzung neben dem Lithiumsalz Lithiumnitrat als weiteres Lithiumsalz Lithiumbis(fluorsulfonyl)imid auf. Durch die spezielle Kombination von Lithiumnitrat, Lithiumbis(fluorsulfonyl)imid und der fluorhaltigen zyklischen Carbonat-Komponente, insbesondere Fluorethylencarbonat, wird eine besonders hohe Lebensdauer und Zyklenbeständigkeit einer Lithium-Ionen-Batterie erreicht. Zudem hat Lithiumbis(fluorsulfonyl)imid den Vorteil, dass es eine höhere thermische Stabilität, d.h. von ca. 95°C, aufweist im Vergleich zu anderen Lithiumsalzen, wie LiPF₆, welche eine thermische Stabilität von ca. 65°C aufweisen. Dadurch wird die Zyklisierungsfähigkeit der Anode bei höheren Temperaturen deutlich verbessert. Durch die spezielle Verwendung des Lithiumsalzes Lithiumbis(fluorsulfonyl)imid wird eine signifikante Performancesteigerung mit gängigen Lösungsmitteln sowie dem Lithiumnitrat und der fluorhaltigen zyklischen Carbonat-Komponente, bevorzugt Fluorethylencarbonat, erreicht.

Bevorzugt weist die Elektrolytzusammensetzung 1 M (mol/L) LiPF₆ in einem Gemisch aus Ethylencarbonat und Dimethylcarbonat, 20 Gew.% Fluorethylencarbonat und 0,1 Gew.% LiNO₃ auf, wobei das Ethylencarbonat und das Dimethylcarbonat in einem Gewichtsverhältnis von 1:1 vorliegen.

Alternativ bevorzugt weist die Elektrolytzusammensetzung 1 M LiPF₆ in einem Gemisch aus Ethylencarbonat und Diethylcarbonat, 5 Gew. % Fluorethylencarbonat und 1 Gew.% LiNO3 auf, wobei das Ethylencarbonat und das Diethylcarbonat in einem Gewichtsverhältnis von 1:1 vorliegen.

Alternativ bevorzugt weist die Elektrolytzusammensetzung 1 M LiPF₆ in einem Gemisch aus Ethylencarbonat und Ethylmethylcarbonat, 10 Gew. % Fluorethylencarbonat, 0,15 Gew.% LiNO₃ und 1 Gew.% Vinylencarbonat auf, wobei das Ethylencarbonat und das Ethylmethylcarbonat in einem Gewichtsverhältnis von 1:1 vorliegen.

Alternativ bevorzugt weist die Elektrolytzusammensetzung 0,8 M LiPF₆ in einem Gemisch aus Ethylencarbonat, Diethylcarbonat und Dimethylcarbonat, 10 Gew. % Fluorethylencarbonat und 0,5 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 1 M LiPF₆ in einem Gemisch aus Ethylencarbonat, Diethylcarbonat und Dimethylcarbonat, 10 Gew. % Fluorethylencarbonat und 0,5 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 1,2 M LiPF₆ in einem Gemisch aus Ethylencarbonat, Diethylcarbonat und Dimethylcarbonat, 10 Gew. % Fluorethylencarbonat und 0,5 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 1 M LiPF₆ in einem Gemisch aus Ethylencarbonat, Diethylcarbonat und Dimethylcarbonat, 10 Gew. % Fluorethylencarbonat und 0,3 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 1 M LiPF₆ in einem Gemisch aus Ethylencarbonat, Diethylcarbonat und Dimethylcarbonat, 10 Gew. % Fluorethylencarbonat und 0,1 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 1 M Lithiumbis(fluorsulfonyl)imid in einem Gemisch aus Ethylencarbonat, Diethylcarbonat und Dimethylcarbonat, 10 Gew. % Fluorethylencarbonat und 0,5 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 0,8 M Lithiumbis(fluorsulfonyl)imid in einem Gemisch aus Ethylencarbonat, Diethylcarbonat und Dimethylcarbonat, 5 Gew. % Fluorethylencarbonat und 1 Gew.% LiNO₃ auf, wobei das Ethylencarbonat, das Diethylcarbonat und das Dimethylcarbonat in einem Gewichtsverhältnis von 1:1:1 vorliegen.

Alternativ bevorzugt weist die Elektrolytzusammensetzung 1,2 M Lithiumbis(fluorsulfonyl)imid in einem Gemisch aus Ethylencarbonat und Diethylcarbonat, 20 Gew. % Fluorethylencarbonat, 0,15 Gew.% LiNO₃ und 1 Gew.% Vinylencarbonat auf, wobei das Ethylencarbonat und das Diethylcarbonat in einem Gewichtsverhältnis von 1:1 vorliegen.

Alternativ bevorzugt weist die Elektrolytzusammensetzung 1 M Lithiumbis(fluorsulfonyl)imid in einem Gemisch aus Ethylencarbonat, Diethylcarbonat und Dimethylcarbonat, 15 Gew. % Fluorethylencarbonat und 0,5 Gew.% LiNO₃ auf, wobei das Ethylencarbonat, das Diethylcarbonat und das Dimethylcarbonat in einem Gewichtsverhältnis von 1:1:1 vorliegen.

Erfindungsgemäß ist eine Lithium-Ionen-Batterie vorgesehen, die (a) ein Gehäuse, (b) einen Batteriekern, der mindestens eine Kathode und mindestens eine Anode, bevorzugt mindestens eine Hochenergieanode, aufweist, und (c) eine erfindungsgemäße Elektrolytzusammensetzung umfasst.

In einer bevorzugten Ausführungsform der vorliegenden Erfindung weist der Batteriekern zusätzlich mindestens ein Separatorelement, bevorzugt mindestens zwei Separatorelemente, bevorzugt genau zwei Separatorelemente, bevorzugt pro Anoden-Kathodenpaar auf. Bevorzugt ist das mindestens eine Separatorelement mit einer erfindungsgemäßen Elektrolytzusammensetzung getränkt, bevorzugt in einer Menge von 5 µL bis 500 µL pro *cm*² des mindestens einen Separatorelements, bevorzugt in einer Menge von 100 µL bis 500 µL pro *cm*² des mindestens einen Separatorelements, bevorzugt in Forschungsversuchzellen, oder bevorzugt 5 µL bis 50 µL pro *cm*² des mindestens einen Separatorelements, bevorzugt in Vollzellen, insbesondere um das Gewicht der Batterie zu verringern. Bevorzugt ist das mindestens eine Separatorelement eine mikroporöse, bevorzugt keramische und hitzebeständige, Membran, die für Ionen durchlässig ist.

Die erfindungsgemäßen Anode, bevorzugt Hochenergieanode, ist bevorzugt eine Silizium-Anode. Alternativ bevorzugt ist als die erfindungsgemäße Anode, bevorzugt als Hochenergieanode, eine Kompositanode aus Graphit und einem Metall oder einer Metalllegierung, wobei das Metall ausgewählt ist aus einer Gruppe bestehend aus Silizium, Zinn, Antimon, Magnesium, Aluminium und einem beliebigen Gemisch davon. Bevorzugt ist die Anode, bevorzugt die Hochenergieanode, eine Silizium/Kohlenstoff-Kompositanode.

Die Silizium-Anode und die Silizium/Kohlenstoff-Kompositanode weisen eine hohe theoretische Kapazität auf.

Bevorzugt weist die Silizium/Kohlenstoff-Kompositanode 5 bis 50 Gew.%, bevorzugt 10 bis 30 Gew.-%, bevorzugt 20 Gew.-% Silizium-Nanopartikel, 45 bis 75 Gew. %, bevorzugt 50 bis 70 Gew.-%, bevorzugt 60 Gew.-% Graphit, 5 bis 15 Gew.-%, bevorzugt 12 Gew.-% Leitruß und 5 bis 15 Gew.-%, bevorzugt 8 Gew.-% Bindemittel auf.

Das Bindemittel enthält bevorzugt mindestens eine Komponente ausgewählt aus der Gruppe bestehend aus Polyacrylsäure, Natriumcellulose, Natriumalginat und SBR ("Styrene-Butadien-Rubber")-Latex. Das Bindemittel ist bevorzugt ein Polyacrylsäure basiertes Bindemittel.

Die Kathode enthält, bevorzugt besteht aus einer Lithium-Metalloxid-Verbindung. Bevorzugt ist die Lithium-Metalloxid-Verbindung ausgewählt aus der Gruppe bestehend aus Lithiumcobaltdioxid LiCoO₂, Lithiumnickeldioxid LiNiO2, Lithiummangandioxid LiMnO₂, Lithiummangantetraoxid LiMn₂O₄, Lithiumnickelmanganoxid Li_{1,0}Ni_{0,5}Mn_{1,5}O₄, Lithiumnickelmangancobaltoxid LiNi_{0,33}Mn_{0,33}Co_{0,33}O₂ und Hochenergie-Lithiumnickelmangancobaltoxid Li_{1,2}Ni_{0,176}Mn_{0,524}Co_{0,100}O₂. Bevorzugt ist die Lithium-Metalloxid-Verbindung Lithiumnickelmangancobaltoxid LiNi_{0,33}Mn_{0,33}Co_{0,33}O₂.

Erfindungsgemäß ist eine Verwendung einer fluorhaltigen zyklischen Carbonat-Komponente und Lithiumnitrat in einer erfindungsgemäßen Elektrolytzusammensetzung zur Verbesserung der Zyklenbeständigkeit einer Lithium-Ionen-Batterie vorgesehen.

Erfindungsgemäß ist eine Verwendung einer fluorhaltigen zyklischen Carbonat-Komponente und Lithiumnitrat in einer erfindungsgemäßen Elektrolytzusammensetzung zur Leistungssteigerung einer Lithium-Ionen-Batterie vorgesehen.

Bevorzugt kann die erfindungsgemäße Kombination aus (i) der fluorhaltigen zyklischen Carbonat-Komponente, insbesondere Fluorethylencarbonat, und (ii) dem Lithiumsalz Lithiumnitrat dazu verwendet werden, insbesondere in Verbindung mit den weiteren Bestandteilen der erfindungsgemäßen Elektrolytzusammensetzung, über mindestens 60 Zyklen, bevorzugt mindestens 100 Zyklen, die Kapazität einer Lithium-Ionen-Batterie nahezu konstant, bevorzugt konstant zu halten. Bevorzugt beträgt die Kapazität der Lithium-Ionen-Batterie durch die Verwendung der (i) fluorhaltigen zyklischen Carbonat-Komponente, insbesondere Fluorethylencarbonat, und (ii) dem Lithiumnitrat, insbesondere in Verbindung mit den weiteren Bestandteilen der erfindungsgemäßen Elektrolytzusammensetzung, nach 60 Zyklen, bevorzugt nach 100 Zyklen, mindestens 80 %, bevorzugt mindestens 85 %, bevorzugt mindestens 90 %, bevorzugt mindestens 95 % der Kapazität derselben Lithium-Ionen-Batterie nach dem dritten Lade- und Entladezyklus nach erstmaliger Inbetriebnahme.

Bevorzugt betrifft die vorliegende Erfindung die oben genannten Verwendung, wobei die fluorhaltige Carbonat-Komponente Fluorethylencarbonat ist.

Bevorzugte Ausführungsformen der vorliegenden Erfindung ergeben sich aus den Unteransprüchen.

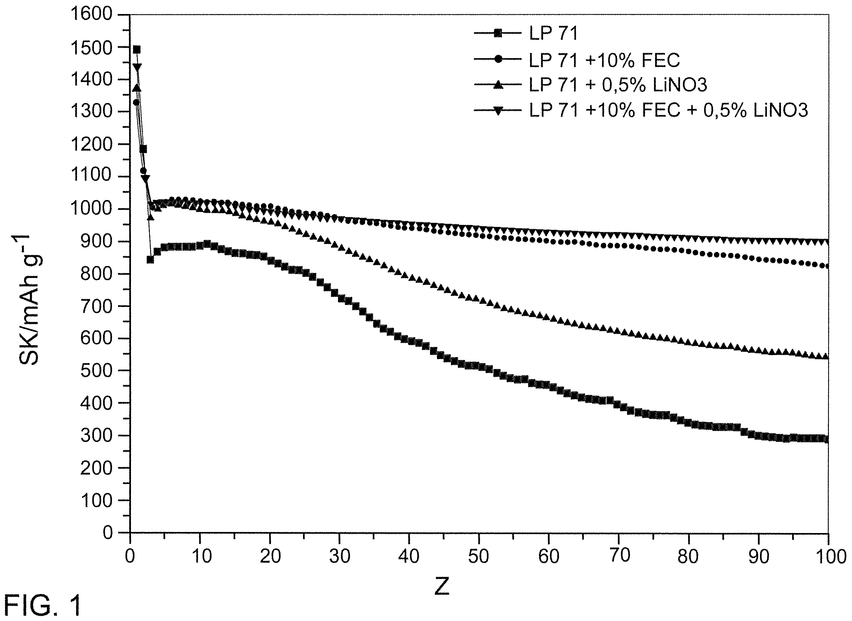

Die vorliegende Erfindung wird anhand der nachfolgenden Ausführungsbeispiele näher erläutert. Dazu zeigen Figuren 1 bis 4 die Kapazitäten und Zyklenbeständigkeiten verschiedener Lithium-Ionen-Batterien.

Figur 1 zeigt spezifischen Kapazitäten SK und Zyklenbeständigkeiten von a) einem Standardelektrolyten LP 71 (1M LiPF₆ in EC/DEC/DMC 1:1:1 Gew.), b) LP 71 + 10 % FEC, c) LP 71 + 0,5 % LiNO₃ und d) LP 71 + 10 % FEC + 0,5 % LiNO₃ in Versuchszellen mit einer Silizium/Kohlenstoff-Komposit-Arbeitselektrode und Lithium-Gegenelektrode (2 Zyklen mit einer C-Rate von C/10; 98 Zyklen mit einer C-Rate von 1C).

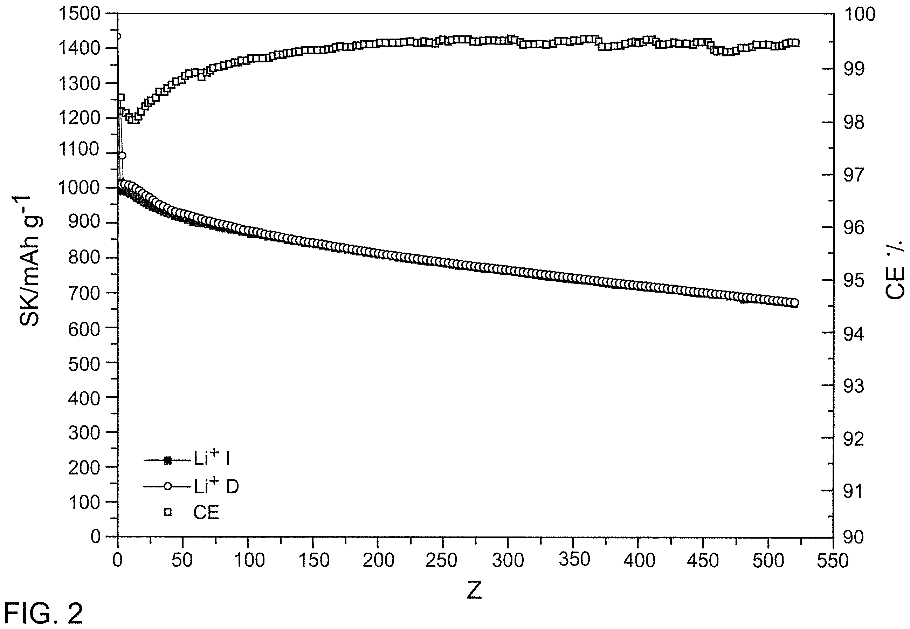

Figur 2 zeigt die spezifische Kapazität SK einer Versuchzelle mit einer Silizium/Kohlenstoff-Komposit-Arbeitselektrode und Lithium-Gegenelektrode mit LP 71 + 10 % FEC + 0,5 % LiNO₃ in der Elektrolytzusammensetzung (2 Zyklen mit einer C-Rate von C/10; 98 Zyklen mit einer C-Rate von 1C).

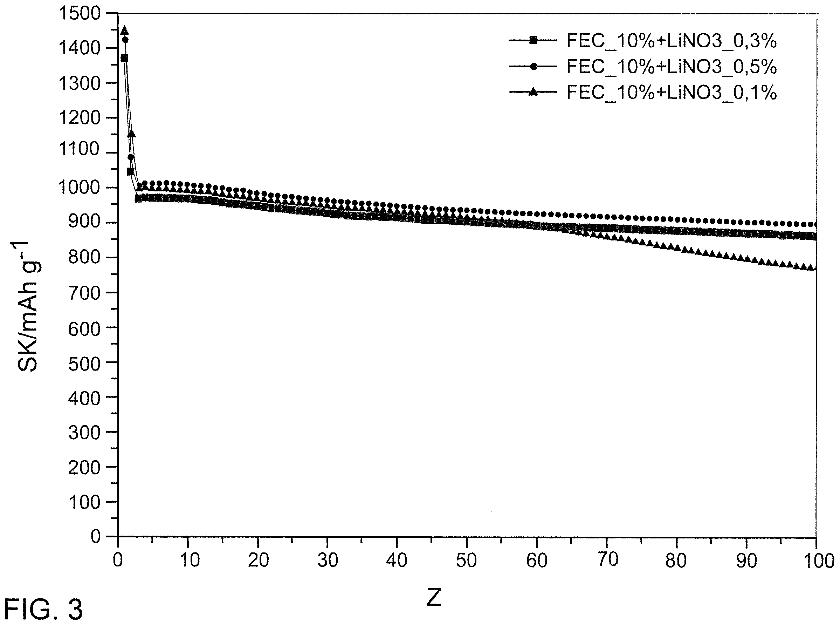

Figur 3 zeigt die Kapazitäten und die Zyklenbeständigkeiten von Lithium-Ionen-Batterien mit unterschiedlichen Elektrolytenzusammensetzungen enthaltend LP 71, 10 % FEC und a) 0,1 %, b) 0,3 % und c) 0,5 % Lithiumnitrat (2 Zyklen mit einer C-Rate von C/10; 98 Zyklen mit einer C-Rate von 1C).

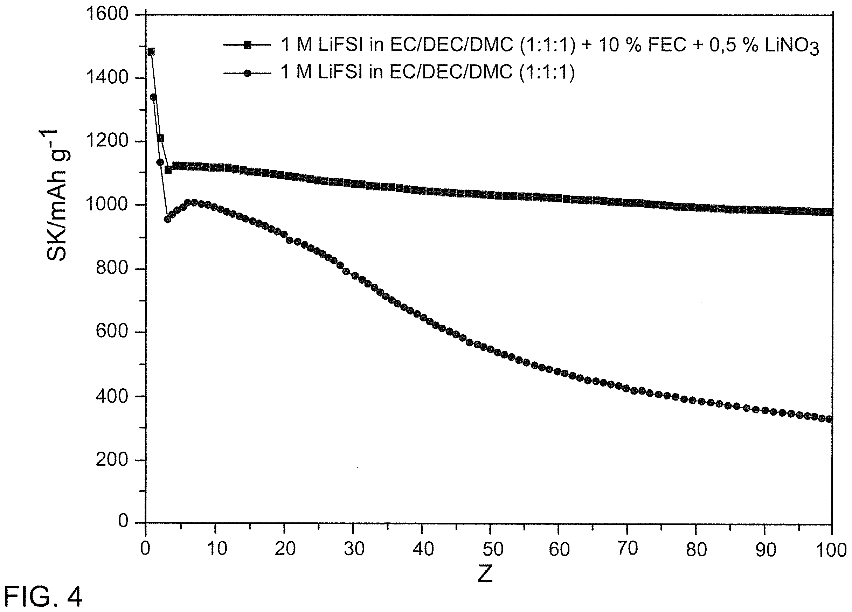

Figur 4 zeigt die spezifische Kapazität SK (mAh/g) einer Lithium-Ionen-Batterie mit einer Standardelektrolytzusammensetzung, d.h. mit Lithiumbis(fluorsulfonyl)imid, aber ohne Lithiumnitrat und Fluorethylencarbonat (Kurve mit Kreissymbolen), und mit einer erfindungsgemäßen Elektrolytzusammensetzung mit Lithiumbis(fluorsulfonyl)imid, Lithiumnitrat und Fluorethylencarbonat (Kurve mit quadratischen Symbolen) über die Zyklen Z (2 Zyklen mit einer C-Rate von C/10; 98 Zyklen mit einer C-Rate von 1C). Die spezifische Kapazität K einer Lithium-Ionen-Batterie mit erfindungsgemäßer Elektrolytzusammensetzung bleibt ab dem dritten Zyklus nach erstmaliger Inbetriebnahme über mehr als 100 Zyklen nahezu konstant. Die spezifische Kapazität K einer Lithium-Ionen-Batterie mit Standardelektrolytzusammensetzung hingegen fällt von ungefähr 1000 mAh/g auf unter 400 mAh/g nach 90 Zyklen ab.

In den Figuren werden folgende Abkürzungen verwendet:
SK = Spezifische Kapazität
FEC = Fluorethylencarbonat
Z = Zyklen
CE = Coulomb-Effizienz
*Li*⁺ I = Lithium-Insertion
*Li*⁺ D = Lithium-Desertion

### Beispiele

### 1. Versuchsreihe mit LiPF₆ als zweites Lithiumsalz

Zunächst wurde zu gängigen kommerziell verfügbaren nichtwässrigen Elektrolyten, nämlich LP 71 (1M LiPF₆ in EC/DEC/DMC im Gewichtsverhältnis von 1:1:1), LP 30 (1M LiPF₆ in EC/DMC im Gewichtsverhältnis von 1:1), LP 40 (1 M LiPF₆ in EC/DEC im Gewichtsverhältnis von 1:1), LP 50 (1M LiPF₆ in EC/EMC im Gewichtsverhältnis von 1:1) (Firma Merck, jetzt BASF), oder 1 M LiPF₆ in EC/DMC im Gewichtsverhältnis von 3:7, eine bestimmte Menge FEC hinzugefügt, welche im Bereich von 1 bis 50 Gew.-% lag. Daraufhin wurde zu dieser Mischung, als zweites Additiv LiNO₃ in einer Menge von 0,05 bis 20 Gew.-% hinzugefügt und die Elektrolytzusammensetzung mit einem Magnetrührer für einige Stunden vermischt. Anschließend wurde die Elektrolytzusammensetzung in Forschungsversuchszellen (Halbzellen gegen Lithium) mit einer Silizium/Kohlenstoff-Arbeitselektrode getestet. Zusammensetzung der Silizium/Kohlenstoff-Arbeitselektrode ist: Silizium-Nanopartikel 20 Gew.-%, Graphit 60 Gew.-%, Leitruß 12 Gew.-% und Polyacrylsäure-Binder 8 Gew.-%. Die Zellen wurden in einer Argon befüllten Glovebox zusammengebaut; hierzu wurden zwischen Arbeits- und Lithiumgegenelektrode zwei Celgard Separatoren gelegt und diese mit unterschiedlichen Mengen des Elektrolyts getränkt, nämlich 100 µL bis 500 µL pro Separator. Nachdem Zusammenbau wurden elektrochemische Zyklisierungstests durchgeführt bei unterschiedlichen C-Raten. Zum Vergleich wurden alle Versuche auch mit dem Standardelektrolyten z.B. LP71, sowie den Elektrolyten mit jeweils nur einem Additiv z.B. LP 71 + FEC und LP 71 + LiNO3, um somit den Effekt der Kombination dieser beiden Additive zu untersuchen und nachzuweisen (siehe Figur 1).

Neben der Untersuchung des Effektes des neuen Elektrolyts in Forschungsversuchszellen, wurden auch Vollzellen gebaut, die eine Silizium/Kohlenstoff-Anode und eine LiNi_{0,33}Mn_{0,33}Co_{0,33}O₂ (NMC) Kathode aufweisen. Hierfür wurde das standardmäßige Zelldesign "18650" gewählt, um die Performance in Vollzellen, ohne Lithiumgegenelektrode zu charakterisieren.

Eine vorteilhafte Auswahl der oben aufgeführten Beispiele ist nachfolgend aufgelistet:
1. Elektrolytzusammensetzung: LP 30 (1M LiPF₆ in EC/DMC 1:1 Gew.) + 20 Gew. % FEC + 0,1 Gew. % LiNO3
2. Elektrolytzusammensetzung: LP 40 (1M LiPF₆ in EC/DEC 1:1 Gew.) + 5 Gew. % FEC. + 1 Gew. % LiNO₃
3. Elektrolytzusammensetzung: LP 50 (1M LiPF₆ in EC/EMC 1:1 Gew.) + 10 Gew. % FEC + 0,15 Gew. % LiNO₃ + 1% VC
4. Elektrolytzusammensetzung: LP 71 (1M LiPF₆ in EC/DEC/DMC 1:1:1 Gew.) + 10 Gew.% FEC + 0,5 Gew. % LiNO₃
5. Elektrolytzusammensetzung: LP 71 (1M LiPF₆ in EC/DEC/DMC 1:1:1 Gew.) + 10 Gew.% FEC + 0,3 Gew. % LiNO₃
6. Elektrolytzusammensetzung: LP 71 (1M LiPF₆ in EC/DEC/DMC 1:1:1 Gew.) + 10 Gew.% FEC + 0,1 Gew. % LiNO₃

### 2. Versuchsreihe mit Lithiumbis(fluorsulfonyl)imid (LiFSI) als zweites Lithiumsalz

Zunächst wurde zu gängigen kommerziell verfügbaren nichtwässrigen Lösungsmittelkombinationen wie z.B. EC/DEC 1:1, EC/DEC 3:7, EC/EMC 1:1, EC/DMC 1:1, EC/EMC 3:7, EC/DMC 3:7, EC/DEC/EMC 1:1:1, EC,DMC,EMC 1:1:1, EC/DEC/DMC 1:1:1, (Firma Sigma Aldrich) eine bestimmte Konzentration LiFSI zugefügt (0,8 bis 1,2 M) und dieses Leitsalz in den Lösungsmitteln gelöst. Anschließend wurde eine bestimmte Menge FEC hinzugefügt, welche im oben genannten Bereich zwischen 0.05 bis 50 wt. % lag. Daraufhin wurde zu dieser neuen Mischung, als zweites Additiv LiNO₃ in einer Menge zwischen 0.05 bis 20 wt. % hinzugefügt und die Elektrolytzusammensetzung mit einem Magnetrührer für einige Stunden vermischt. Anschließend wurde die Elektrolytzusammensetzung in Forschungsversuchszellen (Halbzellen gegen Lithium) mit einer Silizium/Kohlenstoff Arbeitselektrode getestet (Zusammensetzung z.B. Silizium-Nanopartikel 20 wt. %, Graphit 60 wt. %, Leitruß 12 wt. % und 8 wt. % Polyacrylsäure Binder oder Silizium-Nanopartikel 10 wt. %, Graphit 77 wt. %, Leitruß 5 wt. % und 8 wt. % Polyacrylsäure Binder). Die Zellen wurden in einer argonbefüllten Glovebox zusammengebaut, hierzu wurden zwischen Arbeits- und Lithiumgegenelektrode zwei Celgard Separatoren gelegt und diese mit unterschiedlichen Mengen de Elektrolytzusammensetzung getränkt (100 bis 500 µL pro Separator). Nach dem Zusammenbau wurden elektrochemische Zyklisierungstests durchgeführt bei unterschiedlichen C-Raten. Zum Vergleich wurden alle Versuche auch mit dem Referenzelektrolyten 1 M LiFSI in EC/DEC/DMC 1:1:1 ohne Additive durchgeführt, um somit den Effekt der neuen Elektrolytzusammensetzung nachzuweisen und zu verifizieren (siehe Figur 4). Eine vorteilhafte Auswahl der oben aufgeführten Beispiele ist nachfolgend aufgelistet:
1.) Elektrolytzusammensetzung: (1M LiFSI in EC/DMC/DEC 1:1:1 wt.) + 10 wt. % FEC + 0,5 wt. % LiNO₃
2.) Elektrolytzusammensetzung: (0,8M LiFSI in EC/EMC 1:1:1 wt.) + 5 wt. % FEC + 1 wt. % LiNO₃
3.) Elektrolytzusammensetzung: (1,2M LiFSI in EC//DEC 1:1:1 wt.) + 20 wt. % FEC + 0,15 wt. % LiNO₃+ 1% VC
4.) Elektrolytzusammensetzung: (1M LiFSI in EC/DEC/DMC 1:1:1 wt.) + 15 wt. % FEC + 0,5 wt. % LiNO₃

## Patentansprüche

1. Elektrolytzusammensetzung für eine Lithium-Ionen-Batterie mit mindestens einer Kathode und mindestens einer Anode, wobei die Elektrolytzusammensetzung (i) mindestens ein aprotisches, nicht wässriges Lösungsmittel, (ii) eine fluorhaltige zyklische Carbonat-Komponente und (iii) mindestens zwei Lithiumsalze enthält, wobei das eine Lithiumsalz Lithiumnitrat ist, **dadurch gekennzeichnet, dass** die Elektrolytzusammensetzung als weiteres Lithiumsalz Lithiumbis(fluorsulfonyl)imid enthält.

2. Elektrolytzusammensetzung nach Anspruch 1 **dadurch gekennzeichnet, dass** die fluorhaltige zyklische Carbonat-Komponente in einer Menge von 1 bis 50 Gew. % - bezogen auf das Gesamtgewicht der Elektrolytzusammensetzung - vorhanden ist.

3. Elektrolytzusammensetzung nach einem der vorhergehenden Ansprüche **dadurch gekennzeichnet, dass** das Lithiumnitrat in einer Menge von 0,05 bis 20 Gew. % - bezogen auf das Gesamtgewicht der Elektrolytzusammensetzung - vorhanden ist.

4. Elektrolytzusammensetzung nach einem der vorhergehenden Ansprüche **dadurch gekennzeichnet, dass** die fluorhaltige zyklische Carbonatkomponente Fluorethylencarbonat ist.

5. Lithium-Ionen-Batterie umfassend a) ein Gehäuse, b) einen Batteriekern aufweisend mindestens eine Kathode und mindestens eine Anode und c) eine Elektrolytzusammensetzung, wobei die Elektrolytzusammensetzung eine Elektrolytzusammensetzung gemäß einem der Ansprüche 1 bis 4 ist.

6. Lithium-Ionen-Batterie gemäß Anspruch 5 **dadurch gekennzeichnet, dass** die Anode eine Silizium-Anode oder eine Silizium/Kohlenstoff-Komposit-Anode ist.

7. Verwendung einer fluorhaltigen zyklischen Carbonat-Komponente und Lithiumnitrat in einer Elektrolytzusammensetzung gemäß Anspruch 1 zur Verbesserung der Zyklenbeständigkeit einer Lithium-Ionen-Batterie.

8. Verwendung einer fluorhaltigen zyklischen Carbonat-Komponente und Lithiumnitrat in einer Elektrolytzusammensetzung gemäß Anspruch 1 zur Leistungssteigerung einer Lithium-Ionen-Batterie.

9. Verwendung nach Anspruch 7 oder 8 **dadurch gekennzeichnet, dass** die fluorhaltige zyklische Carbonat-Komponente Fluorethylencarbonat ist.

## Claims

1. Electrolyte composition for a lithium-ion battery having at least one cathode and at least one anode, wherein the electrolyte composition contains (i) at least one aprotic non-aqueous solvent, (ii) a fluorine-containing cyclic carbonate component, and (iii) at least two lithium salts, wherein the one lithium salt is lithium nitrate, **characterized in that** the electrolyte composition contains lithium bis(fluorosulfonyl)imide as a further lithium salt.

2. Electrolyte composition according to claim 1, **characterized in that** the fluorine-containing cyclic carbonate component is present in an amount of from 1 to 50 wt% relative to the total weight of the electrolyte composition.

3. Electrolyte composition according to any one of the preceding claims, **characterized in that** the lithium nitrate is present in an amount of from 0.05 to 20 wt% relative to the total weight of the electrolyte composition.

4. Electrolyte composition according to any one of the preceding claims, **characterized in that** the fluorine-containing cyclic carbonate component is fluoroethylene carbonate.

5. Lithium-ion battery comprising a) a housing, b) a battery core having at least one cathode and at least one anode, and c) an electrolyte composition, wherein the electrolyte composition is an electrolyte composition according to any one of the claims 1 to 4.

6. Lithium-ion battery according to claim 5, **characterized in that** the anode is a silicon anode or a silicon/carbon composite anode.

7. Use of a fluorine-containing cyclic carbonate component and lithium nitrate in an electrolyte composition according to claim 1 in order to improve the cycle stability of a lithium-ion battery.

8. Use of a fluorine-containing cyclic carbonate component and lithium nitrate in an electrolyte composition according to claim 1 in order to increase the performance of a lithium-ion battery.

9. Use according to claim 7 or 8, **characterized in that** the fluorine-containing cyclic carbonate component is fluoroethylene carbonate.

## Revendications

1. Composition électrolytique pour une batterie lithium-ion comprenant au moins une cathode et au moins une anode, la composition électrolytique contenant (i) au moins un solvant non aqueux aprotique, (ii) un composé carbonate cyclique fluoré et (iii) au moins deux sels de lithium, un sel de lithium étant du nitrate de lithium, **caractérisée en ce que** la composition électrolytique contient du bis(fluorosulfonyl)imide de lithium comme autre sel de lithium.

2. Composition d'électrolyte selon la revendication 1, **caractérisée en ce que** le composé carbonate cyclique fluoré est présent en une quantité de 1 à 50 % en poids sur la base du poids total de la composition électrolytique.

3. Composition électrolytique selon l'une quelconque des revendications précédentes, **caractérisée en ce que** le nitrate de lithium est présent en une quantité de 0,05 à 20 % en poids sur la base du poids total de la composition électrolytique.

4. Composition électrolytique selon l'une quelconque des revendications précédentes, **caractérisée en ce que** le composé carbonate cyclique fluoré est du carbonate de fluoroéthylène.

5. Batterie Lithium-ion comprenant a) un boîtier, b) un noyau de batterie comprenant au moins une cathode et au moins une anode et c) une composition électrolytique, la composition électrolytique étant une composition électrolytique selon l'une quelconque des revendications 1 à 4.

6. Batterie lithium-ion selon la revendication 5, **caractérisée en ce que** l'anode est une anode en silicium ou une anode en composite de silicium et carbone.

7. Utilisation d'un composé carbonate cyclique fluoré et de nitrate de lithium dans une composition électrolytique selon la revendication 1 pour l'amélioration d'une stabilité du cycle d'une batterie lithium-ion.

8. Utilisation d'un composé carbonate cyclique fluoré et de nitrate de lithium dans une composition électrolytique selon la revendication 1 pour l'amélioration des performances d'une batterie lithium-ion.

9. Utilisation selon la revendication 7 ou 8, **caractérisée en ce que** le composé carbonate cyclique fluoré est du carbonate de fluoroéthylène.
